(19) **Europäisches Patentamt / European Patent Office / Office européen des brevets**

(11) **EP 4 484 856 A1**

(12) **EUROPÄISCHE PATENTANMELDUNG**

(43) Veröffentlichungstag:
**01.01.2025 Patentblatt 2025/01**

(21) Anmeldenummer: 24183270.8

(22) Anmeldetag: **20.06.2024**

(51) Internationale Patentklassifikation (IPC):
**F25B 25/00** (2006.01)   **F25B 49/02** (2006.01)
**F25B 5/02** (2006.01)   **F25B 5/04** (2006.01)

(52) Gemeinsame Patentklassifikation (CPC):
**F25B 25/005; F25B 5/02; F25B 5/04; F25B 49/02;**
F25B 2500/19; F25B 2600/0253; F25B 2700/197;
F25B 2700/21171; F25B 2700/21172;
F25B 2700/21173

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **30.06.2023 DE 102023206184**

(71) Anmelder: **Robert Bosch GmbH**
**70442 Stuttgart (DE)**

(72) Erfinder:
• **Grau, Patrick**
**70806 Kornwestheim (DE)**
• **Heinkele, Matthias**
**71229 Leonberg (DE)**
• **Dierolf, Simon**
**73277 Owen (DE)**

(54) **VERFAHREN ZUR REGELUNG EINES KOMPRESSORS IN EINEM KÄLTEMITTELKREISLAUF**

(57)   Die Erfindung betrifft ein Verfahren zur Regelung eines Kompressors in einem Kältemittelkreislauf, das Verfahren umfassend die folgenden Schritte:

S1. Bestimmen eines thermischen Zielzustands;

S2. Bestimmen eines Soll-Wärmestroms $dQ_{Soll}$ oder einer dazu proportionalen Größe zumindest teilweise auf Grundlage des thermischen Zielzustands;

S3. Bestimmen eines Ist-Wärmestroms $dQ_{Ist}$ oder einer dazu proportionalen Größe und Bestimmen einer Wärmestromabweichung $\Delta_Q$ zwischen dem Ist-Wärmestrom $dQ_{Ist}$ und dem Soll-Wärmestrom $dQ_{Soll}$ beziehungsweise zwischen der zum Ist-Wärmestrom $dQ_{Ist}$ porportionalen Größe und der zum Soll-Wärmestrom $dQ_{Soll}$ proportionalen Größe;

S4. Regeln des Kompressors in einer Kaskadenregelung, wobei ein innerer Regelkreis (R1) der Kaskadenregelung eine Leistung, insbesondere eine Drehzahl, des Kompressors zumindest teilweise auf Grundlage der in Schritt S3 bestimmten Wärmestromabweichung $\Delta_Q$ regelt, und ein äußerer Regelkreis (R2) den Soll-Wärmestrom $dQ_{Soll}$ zumindest teilweise auf Grundlage des in Schritt S1 bestimmten thermischen Zielzustands regelt.

**Fig. 2**

EP 4 484 856 A1

**Beschreibung**

Die Erfindung betrifft ein Verfahren zur Regelung eines Kompressors in einem Kältemittelkreislauf sowie eine Steuerungseinrichtung eines Kompressors, einen Kältemittelkreislauf, ein Computerprogramm zur Durchführung des Verfahrens, und einen computerlesbaren Datenträger. Der Kältemittelkreislauf kann insbesondere ein Kältemittelkreislauf in einem batterie-elektrisch angetriebenen Fahrzeug sein und eingerichtet zur Temperierung von Komponenten wie beispielsweise der elektrischen Batterie.

Stand der Technik

Eine optimale Ausgestaltung des Kältemittelkreislaufs von batterie-elektrisch angetriebenen Fahrzeugen (kurz: BEV = Battery electrical vehicles) ist essenziell für das Wärmemanagement im Fahrzeug, da die Temperierung von Komponenten wie beispielsweise die Fahrzeugbatterie energieaufwändig ist und in vielen Anwendungsfällen zeitgleich mit weiteren Aufgaben wie beispielsweise der Kühlung oder dem Beheizen des Fahrgastraums geschehen muss.

In diesem Zusammenhang spielt die Regelung des Kompressors des Kältemittelkreislaufs eine zentrale Rolle.

Die Drehzahl des Kompressors wird im Stand der Technik auf einen Druck des Kältemittels vor dem Kompressor geregelt. Dessen Sollwert ergibt sich aus den Anforderungen an den Kältemittelkreislauf, beispielsweise aus der geforderten Betriebstemperatur der Fahrzeugbatterie und deren Abweichung zur tatsächlichen, aktuellen Temperatur, oder aus einer geforderten Lufttemperatur der Luft im Fahrgastraum.

Weiter wird der Sollwert durch die technischen Grenzwerte des Kältemitteldrucks vor dem Kompressor bestimmt, speziell um Temperaturgrenzen für die Klimaanlage des Fahrzeugs einzuhalten.

Nachteilig an diesem Ansatz ist, dass die Sollwertbildung des Kältemitteldrucks vor dem Kompressor komplex ist, da der Zusammenhang zwischen dem Kältemitteldruck und der Zielgröße eines bestimmten Wärmestroms nicht linear ist. Dies wirkt sich speziell im Falle einer Kühlung der Fahrzeugbatterie aus, da durch die indirekte Kühlung über einen Kühlkreislauf hier die Zielgröße eindeutig ein Wärmestrom ist.

Es ist eine Aufgabe der Erfindung, ein alternatives oder ein verbessertes Verfahren zur Steuerung eines Kompressors in einem Kältemittelkreislauf anzugeben, sowie eine Steuerungseinrichtung eines Kompressors, einen Kältemittelkreislauf, ein Computerprogramm zur Durchführung des Verfahrens, und einen computerlesbaren Datenträger.

Offenbarung der Erfindung

Die Aufgabe der Erfindung ist mittels eines Verfahrens gemäß Anspruch 1 gelöst, durch eine Steuerungseinrichtung für einen Kompressor gemäß Anspruch 10, durch einen Kältemittelkreislauf gemäß Anspruch 11, durch ein Computerprogramm gemäß Anspruch 12, und durch einen computerlesbaren Datenträger gemäß Anspruch 13. Vorteilhafte Weiterbildungen, zusätzliche Merkmale und/oder Vorteile der Erfindung ergeben sich aus den abhängigen Ansprüchen und der folgenden Beschreibung.

Gemäß einem ersten Aspekt offenbart die vorliegende Offenbarung ein Verfahren zur Regelung eines Kompressors in einem Kältemittelkreislauf, das Verfahren umfassend die folgenden Schritte:

S1. Bestimmen eines thermischen Zielzustands;

S2. Bestimmen eines Soll-Wärmestroms $dQ_{Soll}$ oder einer dazu proportionale Größe zumindest teilweise auf Grundlage des thermischen Zielzustands;

S3. Bestimmen eines Ist-Wärmestroms $dQ_{Ist}$ oder einer dazu proportionalen Größe und Bestimmen einer Wärmestromabweichung DQ zwischen dem Ist-Wärmestrom $dQ_{Ist}$ und dem Soll-Wärmestrom $dQ_{Soll}$ beziehungsweise zwischen der zum Ist-Wärmestrom $dQ_{Ist}$ proportionalen Größe und der zum Soll-Wärmestrom $dQ_{Soll}$ proportionalen Größe;

S4. Regeln des Kompressors in einer Kaskadenregelung, wobei ein innerer Regelkreis der Kaskadenregelung eine Leistung, insbesondere eine Drehzahl, des Kompressors zumindest teilweise auf Grundlage der in Schritt S3 bestimmten Wärmestromabweichung $\Delta_Q$ regelt, und ein äußerer Regelkreis den Soll-Wärmestrom $dQ_{Soll}$ zumindest teilweise auf Grundlage des in Schritt S1 bestimmten thermischen Zielzustands regelt.

Im Rahmen der Erfindung dienen die arabischen Ziffern in der Bezeichnung der Verfahrensschritte "S1" bis "S4" lediglich der Identifizierung der einzelnen Schritte, es soll hierdurch keine Reihenfolge der Verfahrensschritte festgelegt werden. Insbesondere können einige oder mehrere der Schritte S1 bis S4 auch parallel oder wiederholt in einer Schleife durchgeführt werden.

Die Kältekreisregelung kann derart von der Temperaturregelung der Wärmequelle beziehungsweise Wärmesenke wie der Batterie oder der Luft zum Fahrgastraum getrennt werden. Die Notwendigkeit einer Berücksichtigung der oben genannten Nichtlinearitäten in der Beziehung zwischen Wärmestrom und Kältemitteldruck entfällt.

Gemäß einem weiteren Aspekt offenbart die vorliegende Offenbarung eine Steuerungseinrichtung für einen Kompressor in einem Kältemittelkreislauf, der Kältemittelkreislauf zumindest umfassend: ein zirkulierendes Kältemittel, ein elektronisches Expansionsventil (EEV), einen ersten Wärmetauscher, über den der Kältemittelkreislauf bevorzugterweise mit einem Kühlmittelkreislauf thermisch gekoppelt ist, Vorrichtungen zur Messung von Temperatur- und Druckgrößen im Kältemittelkreislauf und bevorzugterweise in dem Kühlmittelkreislauf; wobei die Steuerungseinrichtung zur Durchführung des oben beschriebenen Verfahrens eingerichtet ist.

Gemäß einem weiteren Aspekt offenbart die vorliegende Offenbarung einen Kältemittelkreislauf, umfassend ein zirkulierendes Kältemittel, zumindest einen Kompressor, ein elektronisches Expansionsventil (EEV), einen ersten Wärmetauscher, über den der Kältemittelkreislauf bevorzugterweise mit einem Kühlmittelkreislauf thermisch gekoppelt ist, Vorrichtungen zur Messung von Temperatur- und Druckgrößen im Kältemittelkreislauf und bevorzugterweise in dem Kühlmittelkreislauf, und eine Steuerungseinrichtung zur Regelung des Kompressors, wobei die Steuerungseinrichtung zur Durchführung des oben beschriebenen Verfahrens eingerichtet ist.

Gemäß einem weiteren Aspekt offenbart die vorliegende Offenbarung ein Computerprogramm zur Durchführung des oben beschriebenen Verfahrens, wenn das Computerprogramm von einer Steuerungseinrichtung eines Kompressors in einem Kältemittelkreislauf ausgeführt wird oder auf einem computerlesbaren Datenträger gespeichert ist.

Gemäß einem weiteren Aspekt offenbart die vorliegende Offenbarung einen computerlesbaren Datenträger, auf dem das oben beschriebene Computerprogramm gespeichert ist.

In dem Verfahren kann der thermische Zielzustand in Schritt S1 kann zumindest teilweise durch Bestimmung einer Abweichung $\Delta_T$ zwischen einer Temperatur - Ist - Größe $T_{Ist}$ und einer Temperatur - Soll - Größe $T_{Soll}$ bestimmt werden, und der Soll-Wärmestrom $dQ_{Soll}$ beziehungsweise die dazu proportionale Größe kann in Schritt S2 zumindest teilweise auf Grundlage der Abweichung $\Delta_T$ bestimmt werden.

In dem Verfahren kann die Temperatur - Ist - Größe $T_{Ist}$ in Schritt S1 zumindest teilweise anhand einer Temperatur einer Wärmequelle oder einer Wärmesenke, insbesondere einer Fahrzeugbatterie, bestimmt werden, und die Temperatur-Soll - Größe $T_{Soll}$ kann zumindest teilweise anhand einer Solltemperatur der Wärmequelle oder Wärmesenke bestimmt werden.

Die Kaskadenregelung kann eine Vorsteuerung für den Soll-Wärmestrom $dQ_{Soll}$ beziehungsweise für die dazu proportionale Größe umfassen.

Der vorgesteuerte Soll-Wärmestrom $dQ_{Soll}$ beziehungsweise die vorgesteuerte zum Soll-Wärmestrom $dQ_{Soll}$ proportionale Größe kann zumindest teilweise auf Grundlage eines Modells einer Verlustleistung der Wärmequelle ermittelt werden.

Eine modellbasierte Vorsteuerung des Wärmestroms ermöglicht eine robustere und schnellere Reglerparametrisierung der Kompressorregelung, da die unterschiedlichen Zeitverhalten beider Subsysteme - Kältekreisregelung und Temperaturregelung der Batterie oder der Luft zum Fahrgastraum - berücksichtigt werden können.

Eine robustere Regelung wiederum hat eine höhere Kühlleistung bei gleichen Komponenten zur Folge, da eine kleinere Superheat vonnöten ist, also eine kleinere Temperaturanhebung des Kältemittels gegenüber seiner Verdunstungstemperatur. Eine schnellere Regelung ermöglicht ein schnelleres Erreichen der Zielgrößen und dadurch beispielsweise kleinere Vorlaufzeiten bis zur der maximalen Batterieladegeschwindigkeit, die das Erreichen einer bestimmten Kühlleistung voraussetzt.

Der vorgesteuerte Soll-Wärmestrom $dQ_{Soll}$ beziehungsweise die vorgesteuerte zum Soll-Wärmestrom $dQ_{Soll}$ proportionale Größe kann zumindest teilweise auf Grundlage eines vorbestimmten Temperaturgradienten an der Wärmequelle oder Wärmesenke ermittelt werden.

Der innere Regelkreis kann mit kleineren Zeitkonstanten regeln als der äußere Regelkreis, wodurch eine schnellere Regelung des inneren Regelkreises gegenüber dem äußeren Regelkreis erreicht wird.

Der Ist-Wärmestrom $dQ_{Ist}$ beziehungsweise die zum Ist-Wärmestrom $dQ_{Ist}$ proportionale Größe in Schritt S3 kann zumindest teilweise durch Temperaturmessungen und Druckmessungen im Kältemittelkreislauf bestimmt werden.

Die Wärmequelle oder Wärmesenke kann durch einen Kühlmittelkreislauf gekühlt beziehungsweise beheizt werden, der über einen ersten Wärmetauscher thermisch mit dem Kältemittelkreislauf gekoppelt ist.

Der Ist-Wärmestrom $dQ_{Ist}$ beziehungsweise die zum Ist-Wärmestrom $dQ_{Ist}$ proportionale Größe kann in Schritt S3 zumindest teilweise durch Temperaturmessungen und Druckmessungen an einem Ausgang des ersten Wärmetauschers im Kühlmittelkreislauf bestimmt werden.

Kurzbeschreibung der Figuren

Die Erfindung ist im Folgenden anhand von Ausführungsbeispielen unter Bezugnahme auf die beigefügte schematische und nicht maßstabsgetreue Zeichnung näher erläutert. Bei der Erfindung kann ein Merkmal positiv, d. h.

vorhanden, oder negativ, d. h. abwesend, ausgestaltet sein. In dieser Spezifikation ist ein negatives Merkmal als Merkmal nicht explizit erläutert, wenn nicht gemäß der Erfindung Wert darauf gelegt ist, dass es abwesend ist. D. h. die tatsächlich gemachte und nicht eine durch den Stand der Technik konstruierte Erfindung darin besteht, dieses Merkmal wegzulassen. Das Fehlen eines Merkmals (negatives Merkmal) in einem Ausführungsbeispiel zeigt, dass das Merkmal optional ist. - In den lediglich beispielhaften Figuren (Fig.) der Zeichnung zeigen:

Fig. 1    zeigt schematisch einen Kältemittelkreislauf gemäß einer Ausführungsform der Erfindung;

Fig. 2    zeigt schematisch den Aufbau und die Funktionsweise einer Kompressorregelung gemäß einer Ausführungsform der Erfindung;

Beschreibung

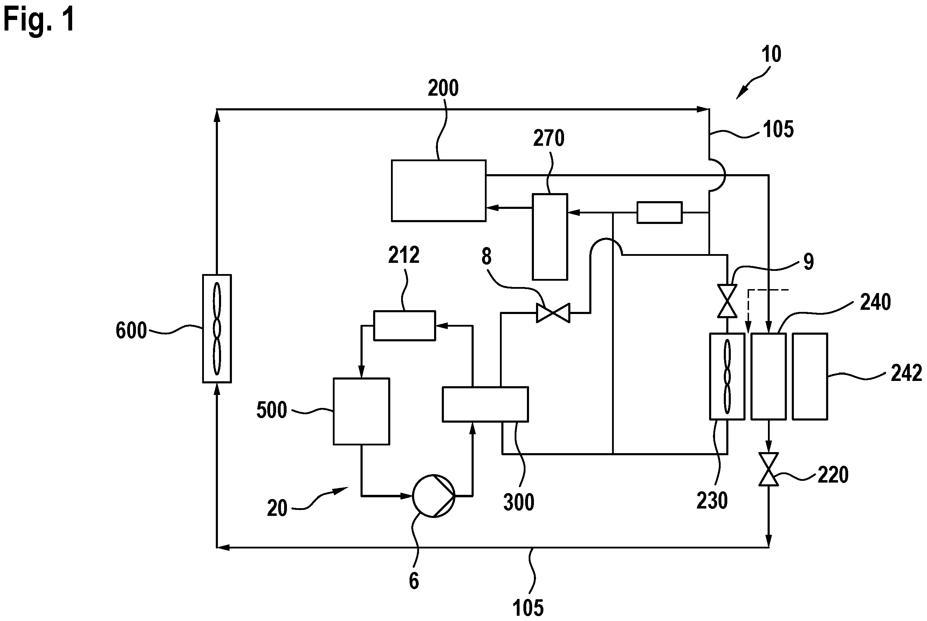

Anhand der Figur 1 wird im Folgenden schematisch der Aufbau und die Funktionsweise eines erfindungsgemäßen Kältemittelkreislaufs 10 für ein Fahrzeug erläutert. In der in Figur 1 gezeigten Ausführungsform kann der Kältemittelkreislauf 10 sowohl in einem Heizbetrieb ausgeführt werden, in welchem beispielsweise eine Passagierkabine und/oder die Fahrzeugbatterie des Fahrzeugs beheizt werden, als auch in einem Kühlbetrieb, in welchem beispielsweise die Fahrzeugbatterie des Fahrzeugs gekühlt wird. Die Anmeldung bezieht sich daher in dieser Hinsicht allgemein auf das Temperaturmanagement einer Wärmequelle oder Wärmesenke 500.

Im Weiteren wird beispielhaft vor allem das Kühlen der Fahrzeugbatterie 500 beschrieben, stellvertretend für eine Wärmequelle oder Wärmesenke 500.

In der dargestellten Ausführungsform arbeiten der Kältemittelkreislauf 10 und der Kühlmittelkreislauf 20 als Wärmepumpe.

Ein Kühlmittelkreislauf 20 zur Führung eines Kühlmittels ist thermisch mit der Fahrzeugbatterie 500 des Fahrzeugs gekoppelt. Mit dem Bezugszeichen 205 ist ein Leitungssystem gekennzeichnet, in welchem das Kühlmittel zwischen den einzelnen Komponenten des Kühlkreislaufs 20 mittels einer Kühlmittelpumpe 6 gefördert wird. Als weitere Komponente umfasst der Kühlmittelkreislauf 20 ein elektrisches Heizelement 212 (positive self-regulating heater, PTC).

Der Kältemittelkreislauf 10 führt ein Kältemittel und weist einen Kompressor 200 sowie eine nicht dargestellte Kältemittelförderpumpe auf. Das Bezugszeichen 105 kennzeichnet ein entsprechendes Leitungssystem des Kältemittelkreislaufs 10, in welchem das Kältemittel gefördert wird. Das Kältemittel umfasst insbesondere Propan (R290) und/oder CO2 (R744).

Ein erster Wärmetauscher 300, in der gezeigten Ausführungsform ein Batteriekühler, ist thermisch sowohl mit dem Kältemittelkreislauf 10 als auch mit dem Kühlmittelkreislauf 20 gekoppelt. Mittels des ersten Wärmetauschers 300 kann bedarfsweise Wärme zwischen dem Kältemittelkreislauf 10 und dem Kühlmittelkreislauf 20 übertragen werden, wobei der erste Wärmetauscher 300 durch ein Paar elektronische regelbarer Expansionsventile (EEV) 8 und 9 in den Kältemittelkreislauf 10 eingebunden ist.

Eine nicht dargestellte elektronische Steuerung ist steuerungstechnisch mit der Kühlmittelförderpumpe, der Kältemittelförderpumpe, den Ventilen des Kühlmittelkreislaufs 20, sowie den in Figur 1 gezeigten Ventilen des Kältemittelkreislaufs 10 verbunden.

Als Wärmequellen der Wärmepumpe können eine Fahrzeugumgebung oder auch Abwärme des elektrischen Antriebsstranges des Fahrzeugs dienen. Zur Nutzung der Wärme aus der Fahrzeugumgebung weist der Kältemittelkreislauf 10 einen Umgebungswärmetauscher 600 im Kältemittelkreislauf 10 auf.

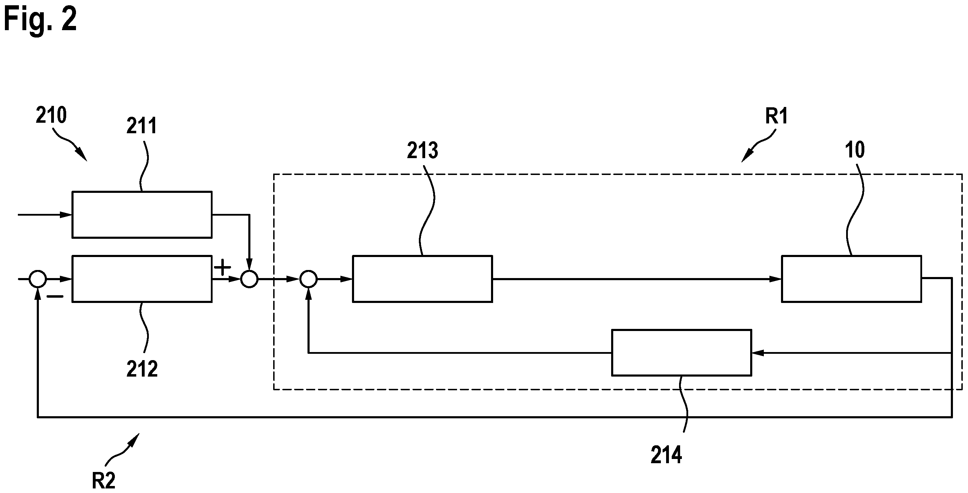

Weitere Komponenten des Kältemittelkreislaufs 10 der in Figur 2 dargestellten Ausführungsform umfassen einen Akkumulator 270, der als Zwischentank für das Kältemittel dient, ein elektronisch geregeltes Expansionsventil 220 zur Entspannung des Kältemittels nach einem für die Beheizung der Passagierkabine im Heizbetrieb verwendeten Kondensator 240, einen Verdunster 230, der vor dem ersten Wärmetauscher 300 angeordnet ist, und ein elektrisches PTC-Heizelement für die Luft des Fahrgastraums.

Nicht explizit in den Figuren dargestellt sind Vorrichtungen zur Messung von Temperatur- und Druckgrößen im Kältemittelkreislauf 10 sowie im Kühlmittelkreislauf 20, die der Überwachung und Bestimmung von beispielsweise Kältemitteldruck und -temperatur sowie Kühlmitteldruck und -temperatur dienen.

Anhand der Figur 2 wird im Folgenden ein Verfahren zur Regelung des Kompressors 200 beschrieben.

In einem Schritt S1 wird ein thermischer Ist-Zustand bestimmt, bevorzugterweise durch die Bestimmung einer Abweichung $\Delta_T$ einer Temperatur - Ist - Größe $T_{Ist}$ von einer Temperatur - Soll - Größe $T_{Soll}$. Die Temperatur - Ist - Größe $T_{Ist}$ kann eine spezifische Enthalpie sein und wird in Ausführungsformen der Erfindung zumindest teilweise anhand einer aktuellen Temperatur der Fahrzeugbatterie 500 bestimmt, beispielsweise mithilfe geeignet angebrachter Temperatursensoren im Kühlmittelkreislauf 20. Dabei gilt $\Delta_T = T_{Ist} - T_{Soll}$.

Die Temperatur - Soll - Größe $T_{Soll}$ wird zumindest teilweise anhand einer Solltemperatur der Fahrzeugbatterie 500 bestimmt, die beispielsweise unter dem Gesichtspunkt einer optimalen Leistung der Fahrzeugbatterie 500 gewählt sein kann, in Ausführungsformen der Erfindung zumindest teilweise in Abhängigkeit von verschiedenen Betriebspunkten, Außentemperaturen, etc.

In einem Schritt S2 wird ein Soll-Wärmestrom dQ$_{Soll}$ oder eine dazu proportionale Größe zumindest teilweise auf Grundlage der Abweichung $\Delta_T$ bestimmt. Dies kann unter Verwendung eines vorbestimmten Temperaturgradienten an der Fahrzeugbatterie 500 durch folgenden Zusammenhang geschehen:

$$dQ_{soll} = \left(\frac{dQ}{dt}\right)_{Soll} = (cp_{Bat}m_{Bat} + cp_{KM}m_{KM})\dot{T}_{Soll} \quad \text{(Gleichung 1)}$$

Dabei ist in bekannter Weise eine zeitliche Änderung einer Größe $X$ als $\frac{dX}{dt}$ beziehungsweise als $\dot{X}$ ausgedrückt.

Ferner bezeichnen in Gleichung 1:

$dQ_{soll}$ Soll-Wärmestrom, hier auf Basis eines Temperaturgradienten bestimmt

$cp_{Bat}$ Wärmekapazität der Fahrzeugbatterie 500

$m_{Bat}$ Masse der Fahrzeugbatterie 500

$cp_{KM}$ Wärmekapazität des Kühlmittels

$m_{KM}$ Masse des Kühlmittels

$\dot{T}_{soll}$ geplanter Temperaturgradient

Dabei kann der geplante Temperaturgradient durch die Abweichung DT ausgedrückt werden. Alternativ zu Gleichung 1 kann der vorgesteuerte Soll-Wärmestrom dQ$_{Soll}$ auch zumindest teilweise auf Grundlage eines Modells einer Verlustleistung der Fahrzeugbatterie 500 ermittelt werden.

In einem Schritt S3 wird ein Ist-Wärmestrom dQ$_{Ist}$ beziehungsweise eine dazu proportionale Größe bestimmt sowie eine Wärmestromabweichung $\Delta_Q$ zwischen dem Ist-Wärmestrom dQ$_{Ist}$ und dem Soll-Wärmestrom dQ$_{Soll}$.

Dabei kann beispielsweise zur Bestimmung des Ist-Wärmestroms dQ$_{Ist}$ das folgende Enthalpiemodell verwendet werden:

$$dQ_{Ist} = \left(\frac{dQ}{dt}\right)_{Ist} = \dot{Q}_{Ist} = \dot{m}\left(h_{us,Hx} - h_{ds,Hx}\right) \quad \text{(Gleichung 2)}$$

mit:

$dQ_{Ist}$ Ist-Wärmestrom am Ausgang des Wärmetauschers

$\dot{m}$ Kühlmittel-Massenstrom am Ausgang des ersten Wärmetauschers 300

$h_{us,Hx}$ spezifische Enthalpie vor dem ersten Wärmetauscher 300

$h_{ds,Hx}$ spezifische Enthalpie hinter dem ersten Wärmetauscher 300

Der Ist-Wärmestrom dQ$_{Ist}$ kann alternativ zu Gleichung 2 auch mit Größen innerhalb des Kältekreises beobachtet werden, was dynamische Vorteile bei der Regelung hat.

Sind vor dem Expansionsventil 220 und nach dem Kondensator 240, sowie nach dem Verdunster 230 und vor dem Kompressor 200 Druck- und Temperatursensoren angeordnet, dann lässt sich damit die spezifische Enthalpie $h$ an den gewöhnlichen Zielbetriebspunkten messen und der Ist-Wärmestroms dQ$_{Ist}$ ebenfalls mit Gleichung 2 bestimmen.

Andere Methoden zur Bestimmung des Ist-Wärmestroms dQ$_{Ist}$ sind ebenfalls denkbar. Unter Umständen gibt es hier jedoch weniger direkte Messgrößen, und durch die hierdurch erforderliche Abstützung auf Modelle gibt es gegebenenfalls größere Abweichungen des ermittelten Ist-Wärmestroms dQ$_{Ist}$ von der Realität.

In einem Schritt S4 wird der Kompressor 200 in einer Kaskadenregelung geregelt, wobei ein innerer Regelkreis R1 der Kaskadenregelung eine Leistung, insbesondere eine Drehzahl, des Kompressors 200 zumindest teilweise auf Grundlage der in Schritt S3 bestimmten Wärmestromabweichung $\Delta_Q$ regelt, und ein äußerer Regelkreis R2 den Soll-Wärmestrom $dQ_{Soll}$ zumindest teilweise auf Grundlage der in Schritt S2 bestimmten Abweichung $\Delta_T$ regelt.

Die Regelkreise R1 und R2 sind in Figur 2 angedeutet. Es ist ferner erkennbar, dass die Kaskadenregelung eine Vorsteuerung 211 für den Soll-Wärmestrom $dQ_{Soll}$ umfasst, die hinter einem Temperatur-Controller 212 ein entsprechendes Signal an einen Wärmestrom-Controller 213 übergibt.

Der Wärmestrom-Controller 213 bildet zusammen mit dem bei dem Steuerungsbaustein 214, bei dem der Ist-Wärmestrom $dQ_{Ist}$ ermittelt wird, der sich im Kältemittelkreislauf 10 einstellt, den inneren Regelkreis R1. Der Wärmestrom-Controller 213 ermittelt unter Verwendung der vom Temperatur-Controller 212 sowie vom Steuerungsbaustein 214 zur Verfügung gestellten Informationen Wärmestromabweichung $\Delta_Q$ und regelt zumindest teilweise auf dieser Grundlage die Kompressorleistung. In dem Steuerungsbaustein 214 kann dabei beispielsweise das in Gleichung 2 dargestellte Enthalpiemodell implementiert sein.

Der äußere Regelkreis R2 wird durch den Temperatur-Controller 212 überwacht, der die Abweichung $\Delta_T$ zwischen der Temperatur - Ist - Größe $T_{Ist}$ und der Temperatur- Soll- Größe $T_{Soll}$ bestimmt und diese Information an den Wärmestrom-Controller 213 weitergibt.

In Ausführungsformen der Erfindung regelt der innere Regelkreis R1 mit kleineren Zeitkonstanten als der äußere Regelkreis R2, wodurch eine schnellere Regelung des inneren Regelkreises gegenüber dem äußeren Regelkreis erreicht wird. Dies unterstützt eine robuste Regelung.

Einige Aspekte der Erfindung lassen sich wie folgt zusammenfassen:

1) Die Sollgröße der Kompressor-Regelung ist der Soll-Wärmestrom $dQ_{Soll}$.
2) Der Ist-Wärmestrom $dQ_{Ist}$ wird beobachtet.
3) Der Soll-Wärmestrom $dQ_{Soll}$ leitet sich aus der Abweichung der Temperatur - Ist - Größe $T_{Ist}$ von der Temperatur - Soll - Größe $T_{Soll}$ ab.
4) Es gibt eine Vorsteuerung für den Soll-Wärmestrom $d_{QSoll}$.

Durch die kaskadierte Regelung lässt sich eine Vorsteuerung durch einen Wärmestrom einfach einbinden. Der vorgesteuerte Wärmestrom lässt die bei der Batteriekühlung z.B. durch die ein Modell der Verlustleistung ermittelt, weiter kann auch über einen geplanten Temperaturgradienten und die thermischen Kapazitäten ein Wärmestrom bestimmt werden.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung. Neben den beschriebenen und abgebildeten Ausführungsformen sind weitere Ausführungsformen vorstellbar, welche weitere Abwandlungen sowie Kombinationen von Merkmalen umfassen können.

**Patentansprüche**

1. Verfahren zur Regelung eines Kompressors (200) in einem Kältemittelkreislauf, das Verfahren umfassend die folgenden Schritte:

   S1. Bestimmen eines thermischen Zielzustands;
   S2. Bestimmen eines Soll-Wärmestroms $dQ_{Soll}$ oder einer dazu proportionalen Größe zumindest teilweise auf Grundlage des thermischen Zielzustands;
   S3. Bestimmen eines Ist-Wärmestroms $dQ_{Ist}$ oder einer dazu proportionalen Größe und Bestimmen einer Wärmestromabweichung $\Delta_Q$ zwischen dem Ist-Wärmestrom $dQ_{Ist}$ und dem Soll-Wärmestrom $dQ_{Soll}$ beziehungsweise zwischen der zum Ist-Wärmestrom $dQ_{Ist}$ proportionalen Größe und der zum Soll-Wärmestrom $dQ_{Soll}$ proportionalen Größe;
   S4. Regeln des Kompressors (200) in einer Kaskadenregelung, wobei ein innerer Regelkreis (R1) der Kaskadenregelung eine Leistung, insbesondere eine Drehzahl, des Kompressors (200) zumindest teilweise auf Grundlage der in Schritt S3 bestimmten Wärmestromabweichung $\Delta_Q$ regelt, und ein äußerer Regelkreis (R2) den Soll-Wärmestrom $dQ_{Soll}$ zumindest teilweise auf Grundlage des in Schritt S1 bestimmten thermischen Zielzustands regelt.

2. Verfahren nach Anspruch 1, **dadurch gekennzeichnet, dass** der thermische Zielzustand in Schritt S1 zumindest teilweise durch Bestimmung einer Abweichung $\Delta_T$ zwischen einer Temperatur - Ist - Größe $T_{Ist}$ und einer Temperatur - Soll - Größe $T_{Soll}$ bestimmt wird, und dass der Soll-Wärmestrom $dQ_{Soll}$ beziehungsweise die dazu proportionale Größe in Schritt S2 zumindest teilweise auf Grundlage der Abweichung $\Delta_T$ bestimmt wird.

3. Verfahren nach Anspruch 2, **dadurch gekennzeichnet, dass** die Temperatur - Ist - Größe $T_{Ist}$ in Schritt S1 zumindest teilweise anhand einer Temperatur einer Wärmequelle oder einer Wärmesenke (500), insbesondere einer Fahrzeugbatterie, bestimmt wird, und die Temperatur-Soll - Größe $T_{Soll}$ zumindest teilweise anhand einer Solltemperatur der Wärmequelle oder Wärmesenke (500) bestimmt wird.

4. Verfahren nach einem der Ansprüche 1 bis 3, **dadurch gekennzeichnet, dass** die Kaskadenregelung eine Vorsteuerung für den Soll-Wärmestrom $dQ_{Soll}$ beziehungsweise für die dazu proportionale Größe umfasst.

5. Verfahren nach Anspruch 4, **dadurch gekennzeichnet, dass** der vorgesteuerte Soll-Wärmestrom $dQ_{Soll}$ beziehungsweise die vorgesteuerte zum Soll-Wärmestrom $dQ_{Soll}$ proportionale Größe zumindest teilweise auf Grundlage eines Modells einer Verlustleistung der Wärmequelle oder Wärmesenke (500) ermittelt wird.

6. Verfahren nach Anspruch 4, **dadurch gekennzeichnet, dass** der vorgesteuerte Soll-Wärmestrom $dQ_{Soll}$ beziehungsweise die vorgesteuerte zum Soll-Wärmestrom $dQ_{Soll}$ proportionale Größe zumindest teilweise auf Grundlage eines vorbestimmten Temperaturgradienten an der Wärmequelle oder Wärmesenke (500) ermittelt wird.

7. Verfahren nach einem der Ansprüche 1 bis 6, **dadurch gekennzeichnet, dass** der innere Regelkreis (R1) mit kleineren Zeitkonstanten regelt als der äußere Regelkreis (R2), wodurch eine schnellere Regelung des inneren Regelkreises (R1) gegenüber dem äußeren Regelkreis (R2) erreicht wird.

8. Verfahren nach einem der Ansprüche 1 bis 7, **dadurch gekennzeichnet, dass** der Ist-Wärmestrom $dQ_{Ist}$ beziehungsweise die zum Ist-Wärmestrom $dQ_{Ist}$ proportionale Größe in Schritt S3 durch Temperaturmessungen und Druckmessungen im Kältemittelkreislauf (10) bestimmt wird.

9. Verfahren nach einem der Ansprüche 3 bis 8, **dadurch gekennzeichnet, dass** die Wärmequelle oder Wärmesenke (500) durch einen Kühlmittelkreislauf (20) gekühlt oder beheizt wird, der über einen ersten Wärmetauscher (300) thermisch mit dem Kältemittelkreislauf (10) gekoppelt ist.

10. Verfahren nach Anspruch 9, **dadurch gekennzeichnet, dass** der Ist-Wärmestrom $dQ_{Ist}$ beziehungsweise die zum Ist-Wärmestrom $dQ_{Ist}$ proportionale Größe in Schritt S3 zumindest teilweise durch Temperaturmessungen und Druckmessungen an einem Ausgang des ersten Wärmetauschers (300) im Kühlmittelkreislauf (20) bestimmt wird.

11. Steuerungseinrichtung (210) für einen Kompressor (200) in einem Kältemittelkreislauf (10), der Kältemittelkreislauf (10) zumindest umfassend:

   ein zirkulierendes Kältemittel, ein elektronisches Expansionsventil (EEV) (100), einen ersten Wärmetauscher (300), über den der Kältemittelkreislauf (10) bevorzugterweise mit einem Kühlmittelkreislauf (20) thermisch gekoppelt ist, Vorrichtungen zur Messung von Temperatur- und Druckgrößen im Kältemittelkreislauf (10) und bevorzugterweise in dem Kühlmittelkreislauf (20); wobei
   die Steuerungseinrichtung (210) zur Durchführung des Verfahrens nach einem der Ansprüche 1 bis 10 eingerichtet ist.

12. Kältemittelkreislauf (10), umfassend ein zirkulierendes Kältemittel, zumindest einen Kompressor (200), ein elektronisches Expansionsventil (EEV) (100), einen ersten Wärmetauscher (300), über den der Kältemittelkreislauf (10) bevorzugterweise mit einem Kühlmittelkreislauf (20) thermisch gekoppelt ist, Vorrichtungen zur Messung von Temperatur- und Druckgrößen im Kältemittelkreislauf (10) und bevorzugterweise in dem Kühlmittelkreislauf (20), und eine Steuerungseinrichtung (210) zur Regelung des Kompressors (200), wobei die Steuerungseinrichtung (210) zur Durchführung des Verfahrens nach einem der Ansprüche 1 bis 10 eingerichtet ist.

13. Computerprogramm zur Durchführung des Verfahrens nach einem der Ansprüche 1 bis 10, wenn das Computerprogramm von einer Steuerungseinrichtung (210) eines Kompressors (200) in einem Kältemittelkreislaufs (10) ausgeführt wird oder auf einem computerlesbaren Datenträger gespeichert ist.

14. Computerlesbarer Datenträger, auf dem ein Computerprogramm nach Anspruch 13 gespeichert ist.

Fig. 1

**Fig. 2**

Europäisches
Patentamt

European
Patent Office

Office européen
des brevets

**EUROPÄISCHER RECHERCHENBERICHT**

Nummer der Anmeldung

EP 24 18 3270

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 640 565 A1 (VAILLANT GMBH [DE]) 22. April 2020 (2020-04-22) * Absätze [0032] - [0052]; Abbildungen 1-3 * ----- | 1-14 | INV. F25B25/00 F25B49/02 F25B5/02 F25B5/04 |
| X | US 5 829 262 A (URATA KAZUMOTO [JP] ET AL) 3. November 1998 (1998-11-03) * Spalte 6, Zeile 17 - Spalte 17, Zeile 30; Abbildungen 1-14 * ----- | 1-5,7,9, 11,13,14 | |

RECHERCHIERTE SACHGEBIETE (IPC)

F25B

Der vorliegende Recherchenbericht wurde für alle Patentansprüche erstellt

| Recherchenort | Abschlußdatum der Recherche | Prüfer |
|---|---|---|
| München | 24. Oktober 2024 | Weisser, Meinrad |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

....................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 3270

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2024

| Im Recherchenbericht angeführtes Patentdokument | Datum der Veröffentlichung | Mitglied(er) der Patentfamilie | Datum der Veröffentlichung |
|---|---|---|---|
| EP 3640565 A1 | 22-04-2020 | DE 102018125411 A1 | 16-04-2020 |
| | | EP 3640565 A1 | 22-04-2020 |
| US 5829262 A | 03-11-1998 | CN 1151008 A | 04-06-1997 |
| | | JP 3331102 B2 | 07-10-2002 |
| | | JP H0953861 A | 25-02-1997 |
| | | TW 301702 B | 01-04-1997 |
| | | US 5829262 A | 03-11-1998 |

Für nähere Einzelheiten zu diesem Anhang : siehe Amtsblatt des Europäischen Patentamts, Nr.12/82

EPO FORM P0461